# EUROPÄISCHE PATENTSCHRIFT

(11) **EP 0 698 572 B1**
(45) Veröffentlichungstag und Bekanntmachung des Hinweises auf die Patenterteilung: **26.05.1999**
(21) Anmeldenummer: 95112900.6
(22) Anmeldetag: 17.08.1995
(51) Int. Cl.: B65H 23/188, D01H 5/42, H02P 5/50, B21B 37/52, G05B 19/414

(54) **Verfahren zur Steuerung von Bahngeschwindigkeiten in einer Einrichtung für den Transport oder die Streckung einer Materialbahn**
Method for the control of web velocities in a device for the transport or the drawing of a web material
Méthode de contrôle des vitesses de bandes de matériau dans un dispositif de transport ou de tirage d'une bande de matériau

(30) Priorität: 27.08.1994 DE 4430550
(43) Veröffentlichungstag der Anmeldung: 28.02.1996
(73) Patentinhaber: CEGELEC AEG Anlagen und Antriebssysteme GmbH, 12277 Berlin (DE)
(72) Erfinder: Möhlenkamp, Georg, Dr.-Ing., D-63322 Rödermark (DE); Heidmann, Günther, Dipl.-Ing., D-64521 Gross-Gerau (DE)
(74) Vertreter: Dreiss, Fuhlendorf, Steimle & Becker, Patentanwälte

(56) Entgegenhaltungen:
- EP-A- 0 041 025
- EP-A- 0 130 231
- EP-A- 0 436 209
- DE-A- 4 238 600
- CONFERENCE RECORD OF THE 1993 IEEE INDUSTRY APPLICATIONS CONFERENCE, IAS'93, Bd.3, 3. Oktober 1993, TORONTO, CANADA Seiten 2420 - 2425 ALBERTO J. POLLMANN 'CONTROL STRATEGIES FOR ROLLING MILLS'
- ELEKTROTECHNIK, Bd.72, Nr.6, Juni 1990, WURZBURG DE Seiten 24 - 26 KARL-HEINZ-WEBER 'Dialogfähig und digitalisiert'
- I&CS - INSTRUMENTS AND CONTROL SYSTEMS, Bd.63, Nr.10, Oktober 1990, RADNOR US Seiten 97 - 108, XP170937 JOSEPH E. BIESIADA 'Digital adjustable-speed drives up troughput and productivity'
- TECHNISCHE RUNDSCHAU, Bd.79, Nr.48, November 1987, BERN CH Seiten 58 - 62 DIETER REINERS 'Antriebstechnik im Automatisierungsverbund'

## Beschreibung

Die Erfindung bezieht sich auf ein Verfahren zur Steuerung von Bahngeschwindigkeiten in einer Einrichtung für den Transport einer elastischen Materialbahn oder die Streckung einer plastisch verformbaren Materialbahn, wobei die Transport- oder Streckmittel jeweils elektrische Antriebe enthalten, die in Drehzahlregelkreisen angeordnet sind.

Bei einer Vielzahl technischer Prozesse werden bandförmige Materialbahnen mittels einer Anzahl motorisch angetriebenen Rollen oder Rollengruppen transportiert. Zwischen den Rollen oder Rollengruppen werden bestimmte Zugspannungen in der Material bahn erzeugt, die trotz des Einflusses von Storgrößen bestimmte Werte beibehalten sollen. Anordnungen der eingangs beschriebenen Art werden beispielsweise in Papiermaschinen, Chemiefaserbearbeitungsmaschinen, Folienmaschinen und dgl. eingesetzt. Derartige Maschinen weisen Mehrmotorenantriebssysteme auf, Dei denen jeder Einzelantrieb für die Materialbahn einer vom Pro zeß verlangten Geschwindigkeit folgen muß.

Bei Mehrmotorantrieben mit drehzahlgeregelten Motoren wurden die Antriebe mittels einer analogen Sollwertkaskade gekoppelt. Hierbei wurde eine zentrale Sollwertspannung an alle Antriebsregler gelegt. Aus der zentralen Sollwertspannung wurde am jeweiligen Antriebsregler, z. B. mittels eines Spannungsteilers, ein spezifischer Sollwert erzeugt.

Ein Verfahren gemäß dem Oberbegriff des Anspruchs 1 ist aus dem Artikel "Control Strategies for Rolling Mills" von A.J. Pollmann aus den "Conference Record of the 1993 IEE Industry applications conference, IAS '93, Bd 3, 3.10.1993, Toronto, Canada, Seiten 2420-2425 bekannt.

Der Erfindung liegt die Aufgab zugrunde, ein Verfahren zur Steuerung von Bahngeschwindigkeiten in einer Einrichtung für den Transport einer elastischen bzw. die Streckung einer plastisch verformbaren Materialbahn dahingehend weiterzuentickeln, daß der zentral aufzubringende Aufwand für die Steuerung und/oder Regelung der Banngeschwindigkeiten reduziert wird.

Die Aufgabe wird bei einem Verfahren der eingangs beschriebenen Art erfindungsgemäß dadurch gelöst, daß die Antriebe jeweils an Antriebsregler angeschlossen sind, die digitale, speicherprogrammierbare, datenverarbeitende Bauelemente enthalten, daß den Antriebsreglern zentral der Wert der Leitgeschwindigkeit der Materialbahn zugeführt wird und jeweils Streckfaktoren für die einzelnen Transport- oder Streckmittel vorgegeben werden, daß die Antriebsregler dezentral aus der Leitgeschwindigkeit und der jeweiligen Verstreckung die zugehörigen Sollwerte der Bahngeschwindigkeit bestimmen, aus denen mittels der Durchmesser der mit den Antrieben verbundenen Rollen und evtl. mittels Getriebeübersetzungsverhältnissen eine Solldrehzahl für den Drehzahlregelkreis bestimmt wird, und daß jeder Antriebsregler vom Antriebsregler des vorausgehenden Transport- oder Streckmittels einen die Verstreckung bis zum vorausgehenden Transport oder Streckmittel enthaltenden Gesamtstreckwert erhält, aus dem er mit dem ihm vorgegebenen Streckfaktor einen angepaßten Gesamtstreckwert berechet, den er einerseits mit der Leitgeschwindigkeit zur Bildung des Sollwerte des Drehzahlregelkreises multipliziert und andererseits an den Antriebsregler des nachfolgenden Transport- oder Streckmittels weiterleitet. Bei diesem Verfahren werden von den Antriebsreglern der Transport- oder Streckwalzen eine Reihe von Funktionen selbsttätig ausgeführt, die eine wesentliche Reduzierung zentral notwendiger Funktionen erlauben. Da zentral nur die Leitgeschwindigkeit den Antriebsreglern vorgegeben wird, kann ein aufwendiges zentrales Regelgerät eingespart werden.

Bei einer bevorzugten Ausführungsform wird den Antriebsreglern durch einen seriellen Bus die Leitgeschwindigkeit mitgeteilt. Der Aufwand für die Datenübertragung zwischen einem Zentralgerät, das die Daten der Leitgeschwindigkeit ausgibt und den Antriebsreglern ist daher relativ gering.

Es ist günstig, wenn dem jeweiligen Antriebsregler vom vorausgehenden Antriebsregler über den seriellen Bus die von allen vorausgehenden Antriebsreglern in der Materialbahn erzeugte Verstreckung mitgeteilt wird, aus der der Antriebsregler mit dem eigenen Verstreckfaktor multidie Gesamterstreckung des jeweiligen Transport- oder Streckmittels bestimmt und einerseits multiplikativ die Bahngeschwindigkeit bestimmt und andererseits über den seriellen Bus dem folgenden Antriebsregler mitteilt.

Die Antriebsregler übernehmen hierbei jeweils dezentral zusätzliche Funktionen, die für den Einrichtbetrieb des gesamten Mehrmotorenantriebs von Bedeutung sind, aber nicht mehr zentral vorgegeben werden müssen.

Vorzugsweise wird jeder Antriebsregler wahlweise durch Befehle auf eine Betriebsweise eingestellt, in der dem Drehzahlregelkreis ein Zusätzlicher Sollwert für eine schnellere oder langsamere Geschwindigkeit überlagert wird, die wahlweise der zum nachfolgenden Antriebsregler über den seriellen Bus übertragenen Information über die Verstreckung hinzugefügt wird. Durch diese Maßnahmen lassen sich Mehrmotorenantriebe mit wenig zentralem Aufwand einrichten.

Bei einer bevorzugten Ausführungsform wird der Drehzahlregelung die Regelung einer technologischen Größe (z.B. Bandzug oder Tanzerwalzenauslenkung überlagert, wobei dem Reglerausgang Sollwerte, die aus den über den seriellen Bus übertragenen Reglerausgängen vorausgegangener Antriebsregler durch Multiplikation mit Verstärkungsfaktoren erhalten werden, zu einem neuen Sollwert überlagert werden, der multiplikativ mit dem im jeweiligen Antriebsregler eingegebenen Verstreckungsfaktor dem Sollwert eine schnellere oder langsamere Geschwindigkeit hinzufügt. Auch bei dieser Ausführungsform übernehmen die jeweiligen Antriebsregler dezentral zusätzliche Aufgaben, während die für die Durchführung der Aufgaben erforderlichen Daten über den seriellen Bus übertragen werden.

Die Erfindung wird im folgenden anhand von in einer Zeichnung dargestellten Ausführungsbeispielen naher beschrieben, aus dem sich weitere Einzelheiten, Merkmale und Vorteile ergeben.

Es zeigen:
- Fig. 1: ein Blockschaltbild einer Anordnung zur Steuerung von Bahngeschwindigkeiten in einer Einrichtung für den Transport einer elastischen Materialbahn oder die Streckung einer plastisch verformbaren Materialbahn und
- Fig. 2: ein Funktions- und Blockschaltbild eines in der Anordnung gem. Fig. 1 eingesetzten Antriebsreglers.

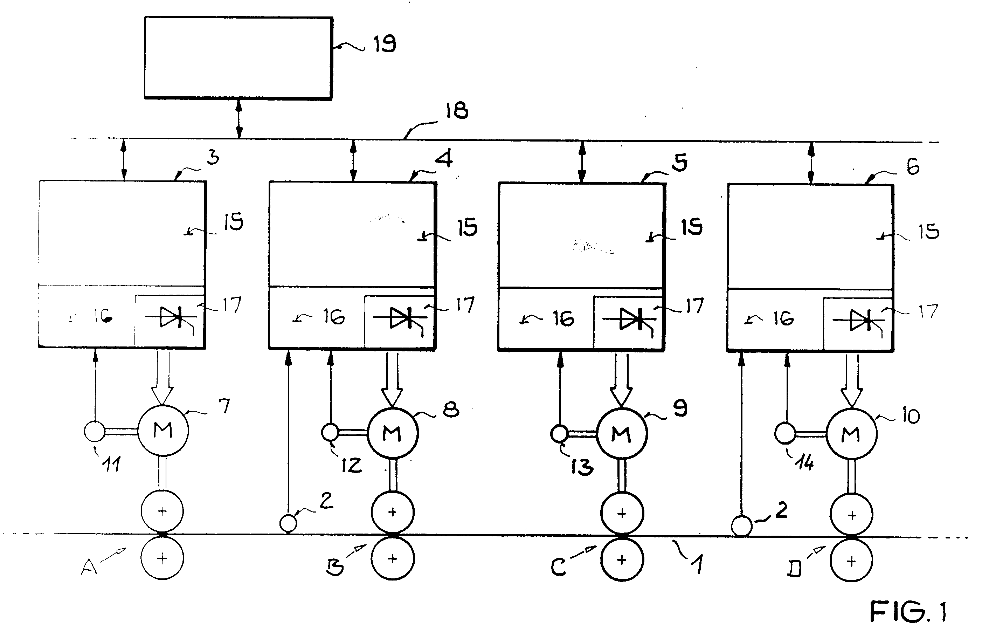

Eine Anordnung zur Regelung eines Transport- und Streckmittels, insbesondere des Bandzugs einer Materialbahn 1 ist in Fig. 1 dargestellt. Die zu transportierende Materialbahn 1 wird kraftschlüssig zwischen Rollenpaaren A, B, C, D hindurchgeführt. Zwischen einigen Rollenpaaren sind Meßwertgeber 2 für die Bandzug-Istwerte vorgesehen, deren Ausgangssignale jeweils einem Antriebsregler, z. B. 4, 6 zugeführt wird. Die Antriebsregler, von denen in Fig. 1 vier Antriebsregler 3, 4, 5, 6 dargestellt sind, speisen jeweils die Antriebe 7, 8, 9, 10 in Form von Gleichstrom- oder Drehstrommotoren. Die Antriebe 7 bis 10 sind jeweils mit den Antriebsrollen der Rollenpaare A, B, C, D verbunden. Mit den Antrieben 7 bis 10 sind jeweils Drenzahlgeber 11, 12, 13, 14 verbunden, deren Ausgangssignale jeweils den Antriebsreglern 3, 4, 5, 6 zugeführt werden. Die Zahl der Antriebe ist nur beispielhaft dargestellt. Sie richtet sich nach den jeweiligen Bedingungen des Prozesses.

Die Antriebsregler 3 bis 6 enthalten jeweils einen digitalen Teil 15 und einen analogen Teil 16. Der digitale Teil 15 übernimmt Regelungs- und Steuerungfunktionen des Antriebs 7, 8, 9, 10 wie die Führungsgrößenberechnung bis zur Sollwertausgabe an die Leistungsstellglieder, die als Stromrichter 17 ausgebildet sind. Der digitale Teil des Antriebsreglers 15, zu dem auch eine speicherprogrammierbare Steuerung gehören kann, überwacht und steuert alle Antriebsfunktionen. Darüberhinaus weist jeder Antriebsregler 3 bis 6 eine Schnittstelle zu einem seriellen Bus 18 auf, an den er als Teilnehmer angeschlossen ist. An den Bus 18 ist auch ein Zentralgerät 19 angeschlossen. Mit dem Bus 18 wird die Kommunikation zwischen dem eine Leitfunktion ausübenden Zentral gerät 19 und den Antriebsreglern 3 bis 6 abgewickelt. Zum analogen Teil 16 der Antriebsregler 3 bis 6 gehören beispielsweise als Stellglieder die Stromrichter 17, die Bestandteil von unterlagerten Motorstromreglern sein können.

Die Antriebsregler 3 bis 6 sind parametrierbar, d. h. die erforderlichen Reglerfunktionen sind Bestandteil einer Firmware Die Funktionen können durch Eingabe entsprechender Parameter in eine Parameterliste aktiviert und dokumentiert werden.

Parametrierbar sind insbesondere die Sollwertaufbereitung, die Steilheitabegrenzung, die Erfassung der Antriebsdrehzahl, die Berechnung der Wellendrehzahl und der Bahngeschwindigkeit, die Berechnung des Istgeschwindigkeitsverhältnisses, die Regelung der Bahngeschwindigkeit, die Zugregelung und die Zugbegrenzung, die Momentenbegrenzung, Überwachungsfunktionen sowie Test- und Inbetriebnahmehilfen.

Vom Zentralgerät 19 wird allen Antriebsreglern, hier 3 bis 6, über den Bus 18 die Leitgeschwindigkeit mitgeteilt. In die Antriebsregler 3 bis 6 werden die für den jeweiligen Antrieb bestimmten Streckfaktoren eingegeben. Die Eingabe erfolgt z. B. beim Einrichten oder vor dem Einrichten über den Bus 18. Weiterhin erhält jeder Antriebsregler vom vorausgehenden Antriebsregler Ober den Bus 18 eine Mitteilung über die bis zum vorausgehenden Antriebsregler der Materialbahn 1 aufgezwungene Verstreckung. Der Antriebsregler berechnet aus dieser, von dem vorausgehenden Bandzügen verursachten Gesamtverstreckung mittels seines eigenen Streckfaktors multiplikativ eine Gesamtverstreckung, die die Verstreckung des eigenen Bandzugs einbezieht und gibt einen entsprechenden Wert über den Bus. 18 an den nächstfolgenden Antriebsregler aus. Aus der Leitgeschwindigkeit berechnet jeder einzelne Antriebsregler 3 bis 6 mittels der Gesamtverstreckung den Sollwert der Bahngeschwindigkeit. Dabei wird das übersetzungsverhältnis von evtl. zwischen den Antrieben 7, 8, 9, 10 und den Rollen angeordneten Getrieben berücksichtigt. Weiterhin wird der Rollendurchmesser der Antriebsrolle berücksichtigt.

Die Übertragung der Daten der Gesamtverstreckung über den Bus 18 wird von den einzelnen Teilnehmern, den Antriebsreglern, unabhängig vom Zentralgerät 19 durchgeführt. Zentral wird bei der in Fig. 1 dargestellten Anordnung nur die Leitgeschwindigkeit allen Teilnehmern, den Antriebsreglern, gemeinsam mitgeteilt. Eine Veränderung der Leitgeschwindigkeit wird daher von allen Antriebsreglern sofort und gleichzeitig festgestellt, so daß der Mehrmotorenantrieb schnell auf Leitgeschwindigkeitsänderungen reagieren kann.

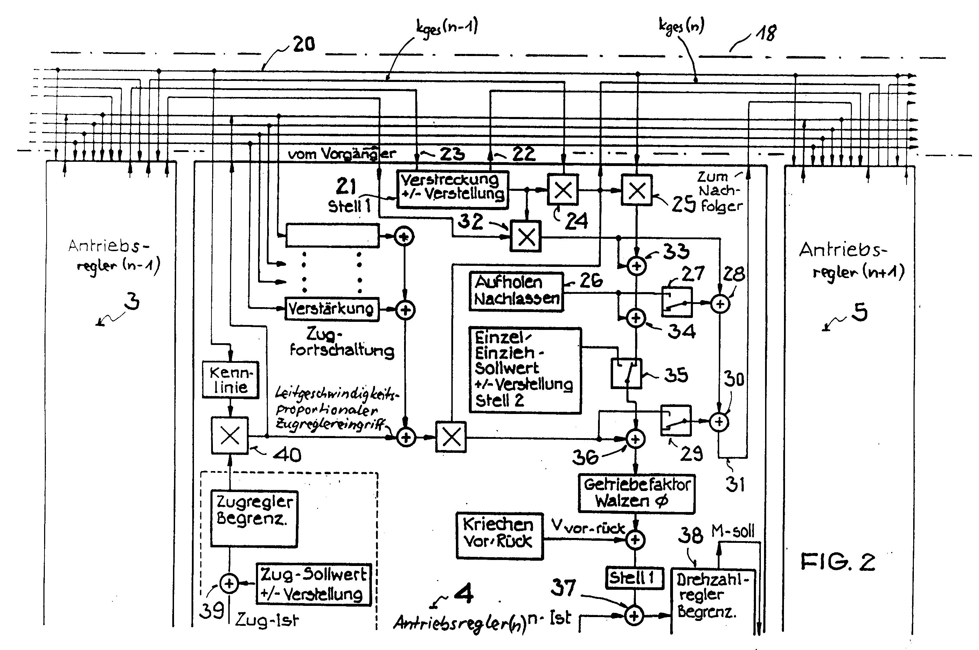

Die Fig. 2 zeigt detaillierter einen Antriebsregler, z. B. den Antriebsregler 4. Der Bus 18 ist als Bereich zwischen zwei strichpunktierten Linien in Fig. 2 dargestellt. Zwischen den strichpunktierten Linien befinden sich eine Reihe weiterer Linien, die jeweils bestimmten Informationen zugeordnet sind und andeuten sollen, daß diese Informationen auf dern Bus 18 übertragen werden.

Eine Linie 20 entspricht der die Leitgeschwindigkeit enthaltenden Nachricht, die jeweils als Bustelegramm übertragen wird. Der Antriebsregler 4 enthält, wie alle Antriebsregler einen Speicher, in dem der Verstreckungsfaktor gespeichert ist. Dieser Speicher ist schematisch in Fig. 2 mit 21 bezeichnet. Die Verstreckung kann Werte annehmen, wie Strecken oder Stauchen, d. h. sie kann kleiner oder großer als eins sein. In diesem Speicher - jedoch in anderen Speicherzellen - ist ein Wert für die Stei lheit gespeichert. Da sich die Verstreckung bei jedem Bandzug auf den in der Transportrichtung oder Materialbahn folgenden Bandzug auswirkt, wird die positive oder negative Verstellung der Verstreckung vom jeweiligen Antriebsregler dem nächstfolgeden mitgeteilt, was durch eine Leitung mit der Ziffer 22 angedeutet ist. Ebenso erhält der Antriebsregler 4 vom vorausgehenden Antriebsregler 3 eine Mitteilung über dessen Wert der Verstreckung. Dies ist in Fig. 2 durch eine Leitung 23 angedeutet.

Im Antriebsregler 4 wird aus dem eingestellten Verstreckungsfaktor und der Gesamtverstreckung, die von den vorausgehenden Bandzügen auf die Transportbahn 1 ausgeübt wird, eine neue Gesamtverstreckung berechnet, die an den in der Bearbeitungsreihenfolge nächsten Antriebsregler 5 über den Bus 18 weitergemeldet wird. Die vor den, dem Antriebsregler 5 vorausgehenden Bandzügen erzeugte Gamtverstreckung ist in Fig. 2 durch eine Leitung mit der Bezeichnung Kges(n-1) dargestellt, die die Übertragung der Gesamtverstreckungsdaten vom Antriebsregler 3 zum Antriebsregler 4 auf dem Bus 18 symbolisiert. Die Weiterleitung der im Antriebsregler 4 neu bestimmten Gesamtverstreckung an den nächstfolgenden Antriebsregler 5 über den Bus 18 ist in Fig. 2 durch die Bezeichnung Kges(n) symbolisiert.

Die Berechnung der neuen Gesamtverstreckung Kges(n) geschieht im Antriebsregler 4 durch einen Multiplizierer 24, dem die Gesamtverstreckung Kges(n-1) und der Verstreckungsfaktor K(n) aus dem Antriebsregler 4 zugeführt wird. Der Multiplizierer 24 kann ein Prozessor sein, der die Multiplikation neben weiteren Aufgaben ausführt.

Die neue Gesamtverstreckung Kges(n) wird in einem Multiplizierer 25 mit der Leitgeschwindigkeit multipliziert. Bei dem Multiplizierer 25 kann es sich um den vorstehend erwähnten Prozessor handeln. Die Verstreckung kann mit den Antriebsreglern der einzelnen Bandzüge noch durch andere Stellelemente beinflußt werden. Es betrifft die kurzzeitige, kleine Verstellung der Materialgeschwindigkeit um Schlaufen in der Materialbahn zu vergrößern oder zu verkleinern. Diese Verstellung, die über ein Eingabeelement an einer Steuereinrichtung von Hand eingeleitet und beendet wird, ist in Fig. 2 durch einen Block mit der Ziffer 26 bezeichnet. Die Verstellung in den beiden Richtungen wird in Block 26 "Aufholen" bzw. "Nachlassen" genannt. Ein dem Befehl "Aufholen" bzw. "Nachlassen" entsprechender Geschwindigkeitswert wird über einen wahlweise einschaltbaren Schalter 27 einer Summierstelle 28 zugeführt, deren Funktion von einem Prozessor, z. B. dem oben erwähnten, übernommen werden kann.

Der Antriebsregler 4 kann, wie auch die übrigen Antriebsregler des Mehrmomentenantriebssystems einen unten noch näher erläuterten Regler einer technologischen Größe, beispielsweise des Zugs, aufweisen, der eine Stellgröße erzeugt, die über einen Schalter 29 einem Summierer 30 beaufschlagt, der in Reihe mit dem Summierer 28 liegt. Beide Summierer können durch einen Addierer eines Prozessors realisiert sein. Die Schalter 27 und 29 werden jeweils nur geschlossen, wenn sich das "Aufholen" oder "Nachlassen" oder die Regelung der technologischen Größe auf die Kaskade auswirken soll. Für die nächsten Antriebsregler wird die Information auf dem Bus 18 übertragen. Dies ist in Fig. 2 durch die Leitung 31 symbolisiert. Da die Verstreckung im jeweiligen Bandzug das "Aufholen" und "Nachlassen" bzw. die Zugregelung beeinflußt, wird in einem Multiplizierer 32, der Verstreckungsfaktor mit einem aus dem vorhergehenden Antriebsregler 3 über den Bus 18 übertragenen Wert multipliziert, der im Antriebsregler 3 auf die gleiche Weise bestimmt wird wie im Antriebsregler 4.

Der Wert, den der Multiplizierer 32 ausgibt, wird dem Summierer 28 und einem Summierer 33 zugeführt, der weiterhin von dem mit dem Multiplizierer 25 erzeugten Wert beaufschlagt wird. Der vom Summierer 33 erzeugte und in einem weiteren Summierer 34 der Wert für "Aufholen" bzw. "Nachlassen" überlagert. Der vom Summierer 34 erzeugte Wert wird über einen Schalter 35, mit dem der Antriebsregler 4 wahlweise auch auf Einzelbetrieb umschaltbar ist, einem Summierer 36 zugeführt, in dem die Zugregeleingriff aufgeschaltet wird. Die Summierer 33, 34, 36 sind durch einen oder mehrere Prozessoren realisiert. Aus dem vom Summierer 36 erzeugten Wert wird mittels eines Getriebefaktors und des Rollendurchmessers der Sollwert der Drehzahl bestimmt. Diesem Sollwert kann ein Steuersignal für Kriechen überlagert werden. Das Sollwertsignal ist steilheitsbegrenzt und beaufschlagt einen Summierer 37, in dem die Drehzahlregelabweichung gebildet wird, die einen Drehzahlregler 38 beaufschlagt, der Sollwert an den unterlagerten Strom- oder Momentenregelkreis ausgibt.

Der Antriebsregler 4 enthält einen überlagerten Zugregelkreis üblicher Art. Die Regelabweichung des Zugreglers wird in einem Summierer 39 gebildet und nach Begrenzung bzw. Freigabe einem Multiplizierer 40 zugeführt, dessen andere Eingangsgröße die durch nach einer Kennlinie beeinflußte Leitgeschwindigkeit ist. Die Ausgangsgröße des Multiplizierers 40, der durch einen Prozessor realisiert werden kann, wird über den Bus 18 allen Teilnehmern mitgeteilt. Der Antriebsregler 4 erhält über den Bus 18 von allen Antriebsreglern, die einen Zugregler enthalten, z. B. 3, 6, die jeweiligen Zugreglereingriffe mitgeteilt, die jeweils um gewünschte Faktoren verstärkt und dem eigenen Zugregeleingriff überlagert werden, bevor diese mit der dem jeweiligen Antriebsregler entsprechenden Gesamtverstreckung multipliziert wird. Danach erfolgt die Beaufschlagung des Summierers 36.

## Patentansprüche

1. Verfahren zur Steuerung von Bahngeschwindigkeiten in einer Einrichtung für den Transport einer elastischen Materialbahn (1) oder der Streckung einer plastisch verformbaren Materialbahn (1), wobei die Transport- oder Streckmittel (A, B, C, D) jeweils elektrische Antriebe (7, 8, 9, 10) enthalten, die in Drehzahlregelkreisen angeordnet sind und wobei die elektrischen Antriebe (7, 8, 9, 10) jeweils an Antriebsregler (3, 4, 5, 6) angeschlossen sind, die digitale, speicherprogrammierbare, datenverarbeitende Bauelemente (15) enthalten, wobei den Antriebsreglern (3, 4, 5, 6) zentral der Wert der Leitgeschwindigkeit der Materialbahn (1) zugeführt wird und jeweils Streckfaktoren für die einzelnen Transport- oder Streckmittel (A, B, C, D) vorgegeben werden, **dadurch gekennzeichnet,** daß die Antriebsregler (3, 4, 5, 6) dezentral aus der Leitgeschwindigkeit und der jeweiligen Verstreckung die zugehörigen Sollwerte der Bahngeschwindigkeiten bestimmen, aus denen mittels der Durchmesser der mit den elektrischen Antrieben (7, 8, 9, 10) verbundenen Transport- oder Streckmittel (A, B, C, D) eine Solldrehzahl für den Drehzahlregelkreis bestimmt wird und daß jeder Antriebsregler (n) vom Antriebsregler (n-1) des vorausgehenden Transport- oder Streckmittels (A, B, C, D) einen die Verstreckung bis zum vorausgehenden Transport- oder Streckmittel (A, B, C, D) enthaltenden Gesamtstreckwert (kges (n- 1)) erhält, aus dem er mit dem ihm vorgegebenen Streckfaktor einen angepaßten Gesamtstreckwert (kges(n)) berechnet, den er einerseits mit der Leitgeschwindigkeit zur Bildung des Sollwerts des Drehzahlregelkreises multipliziert und andererseits an den Antriebsregler (n+1) des nachfolgenden Transport- oder Streckmittels (A, B, C, D) weiterleitet.

2. Verfahren nach Anspruch 1, dadurch gekennzeichnet, daß den Antriebsreglern (3, 4, 5, 6) durch einen seriellen Bus (18) die Leitgeschwindigkeit mitgeteilt wird.

3. Verfahren nach Anspruch 1 oder 2, dadurch gekennzeichnet, daß jeder Antriebsregler wahlweise durch Befehle auf eine Betriebsweise eingestellt wird, in der dem Drehzahlregelkreis ein zusätzlicher Sollwert für eine schnellere oder langsamere Geschwindigkeit übertragen wird, die wahlweise der zum nachfolAntriebsregler über den seriellen Bus (18) übertragenen Information über die Verstreckung hinzugefügt wird.

4. Verfahren nach einem oder mehreren der vorhergehenden Ansprüche, dadurch gekennzeichnet, daß der Drehzahlregelung die Regelung einer technologischen Größe überlagert wird und daß die Stellgröße der technologischen Größe wahlweise Sollwerten, die aus den über den seriellen Bus übertragenen Regelabweichnungen vorausgehender Antriebsregler durch Multiplikation mit Verstärkungsfaktoren erhalten werden, zu einem neuen Sollwert überlagert werden, der multiplikativ mit dem im jeweiligen Antriebsregler eingegebenen Verstärkungsfaktor einerseits dem Sollwert des Drehzahlregelkreises hinzugefügt und andererseits wahlweise dem Wert der technologischen Größe hinzugefügt wird.

5. Verfahren nach einem oder mehreren der vorhergehenden Ansprüche, dadurch gekennzeichnet, daß an Stelle der Drehzahlregelung eine Bahngeschwindigkeitsregelung durchgeführt wird.

6. Verfahren nach Anpruch 5, dadurch gekennzeichnet, daß die Bahngeschwindigkeitsistwerte aus der Drehzahl des jeweiligen Antriebs unter Berücksichtigung von Walzendurchmesser und Übersetzung eines Getriebes gebildet werden.

## Claims

1. A method of controlling web speeds in a device for the transportation of an elastic material web (1) or the stretching of a plastically deformable material web (1), wherein the transportation or stretching means (A, B, C, D) each include respective electric drives (7, 8, 9, 10) which are arranged in rotary speed regulating circuits and wherein the electric drives (7, 8, 9, 10) are respectively connected to drive regulators (3, 4, 5, 6) which include digital, memory-programmable, data-processing components (15), wherein the value of the control speed of the material web (1) is centrally fed to the drive regulators (3, 4, 5, 6) and stretch factors for the individual transportation or stretching means (A, B, C, D) are respectively predetermined, characterised in that the drive regulators (3, 4, 5, 6) decentrally determine from the control speed and the respective stretching effect the associated reference values of the web speeds, from which a reference rotary speed for the rotary speed regulating circuit is determined by means of the diameters of the transportation or stretching means (A, B, C, D) connected to the electric drives (7, 8, 9, 10) and that each drive regulator (n) receives from the drive regulator (n-1) of the preceding transportation or stretching means (A, B, C, D) a total stretch value (kges (n-1)) which contains the stretch effect up to the preceding transportation or stretching means (A, B, C, D) and from which with the stretch factor predetermined therefor it calculates an adapted total stretch value (kges (n)) which on the one hand it multiplies by the control speed to form the reference value of the rotary speed regulating circuit and which on the other hand it passes to the drive regulator (n+1) of the following transportation or stretching means (A, B, C, D).

2. A method according to claim 1 characterised in that the control speed is communicated to the drive regulators (3, 4, 5, 6) by a serial bus (18).

3. A method according to claim 1 or claim 2 characterised in that each drive regulator is selectively set by commands to a mode of operation in which there is transmitted to the rotary speed regulating circuit an additional reference value for a faster or slower speed which is selectively added to the information about the stretching effect, which is transmitted to the following drive regulator by way of the serial bus (18).

4. A method according to one or more of the preceding claims characterised in that the regulation of a technological parameter is superimposed on the rotary speed regulation and that the control value of the technological parameter is selectively superimposed on reference values which are obtained from the regulating deviations, transmitted by way of the serial bus, in respect of preceding drive regulators by multiplication with gain factors, to form a new reference value which multiplicatively with the gain factor inputted in the respective drive regulator is added on the one hand to the reference value of the rotary speed regulating circuit and is added on the other hand selectively to the value of the technological parameter.

5. A method according to one or more of the preceding claims characterised in that web speed regulation is effected instead of rotary speed regulation.

6. A method according to claim 5 characterised in that the web speed actual values are formed from the rotary speed of the respective drive, having regard to roller diameter and transmission ratio of a transmission.

## Revendications

1. Méthode de contrôle des vitesses de bandes de matériau dans un dispositif de transport d'une bande de matérieau élastique (1) ou de tirage d'une bande de matériau apte à la déformation plastique (1), les moyens de transport ou de tirage (A, B, C, D) contenant des entraînements électriques respectifs (7, 8, 9, 10), lesquels sont agencés en circuits de réglage de vitesse de rotation et raccordés à des régulateurs d'entraînement respectifs (3, 4, 5, 6) qui contiennent des composants (15) numériques, de traitement de données, programmables, dans laquelle la valeur de la vitesse de défilement de la bande de matériau (1) est transmise de manière centralisée aux régulateurs d'entraînement (3, 4, 5, 6) et des facteurs de tirage pour les différents moyens de transport ou de tirage (A, B, C, D) sont prédéterminés, caractérisée en ce que les régulateurs d'entraînement (3, 4, 5, 6) déterminent de manière décentralisée, à partir de la vitesse de défilement et du tirage, les valeurs de consigne correspondantes des vitesses de bandes, à partir desquelles est calculée, grâce au diamètre des moyens de transport ou de tirage (A, B, C, D) reliés aux entraînements électriques (7, 8, 9, 10), une vitesse de rotation de consigne pour le circuit de réglage de vitesse de rotation et en ce que chaque régulateur d'entraînement (n) reçoit, du régulateur d'entraînement (n-1) du moyen de transport ou de tirage (A, B, C, D) précédent, une valeur de tirage globale (kges (n-1)) comprenant le tirage jusqu' au moyen de transport ou de tirage (A, B, C, D) précédent, valeur à partir de laquelle il calcule, grâce au facteur de tirage prédéterminé qui lui est donné, une valeur de tirage globale adaptée (kges(n)), que, d'une part, il multiplie par la vitesse de défilement pour obtenir la valeur de consigne du circuit de réglage de vitesse de rotation et que, d'autre part, il transmet au régulateur d'entraînement (n+1) du moyen de transport ou de tirage (A, B, C, D) suivant.

2. Méthode selon la revendication 1, caractérisée en ce que la vitesse de défilement est communiquée aux régulateurs d'entraînement (3, 4, 5, 6) par un bus série (18).

3. Méthode selon la revendication 1 ou 2, caractérisée en ce que chaque régulateur d'entraînement peut être ajusté de manière facultative par des instructions sur un mode de fonctionnement, dans lequel une valeur de consigne supplémentaire pour une vitesse plus rapide ou plus lente est transmise au circuit de réglage de vitesse de rotation, laquelle vitesse est ajoutée de manière facultative à l'information relative au tirage qui est transmise par le bus série (18) au régulateur d'entraînement suivant.

4. Méthode selon l'une au moins des revendications précédentes, caractérisée en ce que le réglage d'une grandeur technologique est superposé au réglage de la vitesse de rotation et que la variable réglante de la grandeur technologique est superposée, de manière facultative, aux valeurs de consigne, obtenues à partir des écarts de réglage du régulateur d'entraînement précédent transmis par le bus série et multipliés par les facteurs d'amplification, pour donner une nouvelle valeur de consigne qui, multipliée par le facteur d'amplification entré dans le régulateur d'entraînement, est d'une part ajoutée à la valeur de consigne du circuit de réglage de vitesse de rotation et d'autre part ajoutée, de manière facultative, à la valeur de la grandeur technologique.

5. Méthode selon l'une au moins des revendications précédentes, caractérisée en ce qu'un réglage de vitesse de bandes est effectué en lieu et place d'un réglage de vitesse de rotation.

6. Méthode selon la revendication 5, caractérisée en ce que les valeurs effectives des vitesse de bandes sont déterminées par la vitesse de rotation de chaque entraînement compte tenu du diamètre des rouleaux et du rapport de transmission d'un engrenage.
